# EUROPEAN PATENT APPLICATION

(11) **EP 4 779 261 A1**
(43) Date of publication of application: **22.07.2026**
(21) Application number: 25867248.4
(22) Date of filing: 05.11.2025
(51) Int. Cl.: G01B 11/16, G01B 11/24, H01M 10/42, H01M 10/48, H01M 50/105, H01M 50/178

(54) **SWELLING TEST APPARATUS CAPABLE OF MEASURING SIZE OF BATTERY MODULE**

(30) Priority: 14.11.2024 KR 20240161731
(71) Applicant: LG Energy Solution Ltd., Seoul 07335 (KR)
(72) Inventor: JO, Yeong Shin, Daejeon 34122 (KR); KWON, Hee Yong, Daejeon 34122 (KR); KIM, Seok Hee, Daejeon 34122 (KR); BAE, Dae Han, Daejeon 34122 (KR); SHIN, Shin Yong, Daejeon 34122 (KR)
(74) Representative: BCKIP Part mbB
(86) International application number: PCT/KR2025/018031
(87) International publication number: WO 2026/106220

(57) **Abstract**

Disclosed is a swelling test apparatus including a chamber having an internal space configured to accommodate a battery module, a power supply unit configured to charge and discharge the battery module, a measurement unit configured to measure changes in size of the battery module, a frame unit configured to allow the measurement unit to be mounted thereto, and a receiving unit configured to receive information about the size of the battery module measured by the measurement unit, wherein the measurement unit is disposed so as to face a side surface of the battery module disposed in the chamber.

## Description

### [Technical Field]

This application claims the benefit of priority to Korean Patent Application No. 2024-0161731 filed on November 14, 2024, the disclosure of which is incorporated herein by reference in its entirety.

The present invention relates to a swelling test apparatus capable of measuring the size of a battery module, and more particularly to a swelling test apparatus capable of measuring the size of a battery module configured to obtain the results of a swelling test in real time while performing the swelling test by repeatedly charging and discharging the battery module.

### [Background Art]

Carbon emission regulations are being tightened as an alternative for reducing greenhouse gases, and the proportion of people choosing eco-friendly energy as a source of electricity is gradually increasing. Thereamong, lithium secondary batteries are being used as an energy source for various electronic devices because the lithium secondary batteries can be reused through repeated charging and discharging, unlike primary batteries that are used once and discarded.

Furthermore, in fields requiring high-power and high-capacity energy sources, such as electric vehicles, the proportion of lithium secondary batteries assembled into battery modules and battery packs for application is increasing.

During repeated charging and discharging processes of a lithium secondary battery, an electrolyte in the lithium secondary battery may be decomposed and gas may be generated, whereby a phenomenon in which the volume of the lithium secondary battery expands, i.e. a swelling phenomenon, may occur. If swelling of the lithium secondary battery is not controlled, a battery module including a plurality of lithium secondary batteries may be structurally deformed, which may lead to reduced durability, degraded performance, and a shortened lifespan of the battery module.

In addition, the volume expansion of the lithium secondary battery may induce deformation of the battery module, potentially leading to explosion of the battery module.

In order to prevent the above problem, a test of repeatedly charging and discharging the battery module and measuring voltage drop of the battery module according to the number of charge and discharge cycles may be conducted. In this case, it is possible not only to measure the lifespan of the battery but also to measure the degree of volume change in the battery module during the charging and discharging processes.

Specifically, a method of charging and discharging the battery module in a battery charging and discharging chamber a predetermined number of times, removing the battery module from the battery charging and discharging chamber, and measuring the width of the battery module is used.

In this case, the degree of expansion of the battery module may be measured only after the predetermined number of charge and discharge cycles are completed, and it is difficult to check the degree of expansion of the battery module if the battery module is charged and discharged during the charge and discharge cycles less than the predetermined number of charge and discharge cycles.

Furthermore, since the swelling test process and the measurement process are separately performed, measuring the degree of swelling of each battery module after various charge and discharge cycles requires a long time, and it is impossible to check changes in the size of the battery module after charge and discharge cycles different from the specified number of charge and discharge cycles. Consequently, values before or after the specific charge-discharge cycles must be estimated using methods such as linear interpolation, and therefore it is difficult to obtain accurate results.

In this regard, Patent Document 1 discloses a cylindrical battery measurement instrument that measures changes in the external shape of a cylindrical battery at a plurality of different angles using a laser while charging and discharging the cylindrical battery.

Patent Document 1 discloses a cylindrical battery measurement instrument including a housing provided with a mounting portion configured to allow a cylindrical battery to be mounted therein, a swelling test device, and a sensor device in order to measure changes in the external shape of the cylindrical battery in real time while charging and discharging the cylindrical battery, but does not suggest technology for measuring changes in the external shape of the battery module while charging and discharging the battery module.

Patent Document 2 discloses a cell jig for measuring swelling of a battery cell capable of detecting changes in the volume, etc. of the battery cell in an overall width direction, thereby facilitating the measurement of swelling of the battery cell in the overall width direction, and a battery cell swelling measurement method using the same.

In Patent Document 2, a single battery cell is disposed on a plate, a guide bar fastened to a side wall disposed adjacent to the battery cell via an elastic pressing member is provided, and the movement or pressure of the guide bar caused by a swelling phenomenon of the battery cell is detected to measure the overall width variation of the battery cell.

Patent Document 2 discloses technology for detecting changes of the single battery cell in the overall width direction, but does not suggest technology for measuring changes in the external shape of a battery module while charging and discharging the battery module.

Therefore, there is a need to develop technology for obtaining the results of a swelling test of a battery module in real time.

### (Prior Art Documents)

(Patent Document 1) Korean Patent Application Publication No. 2024-0097243 (2024.06.27)
(Patent Document 2) Korean Patent Application Publication No. 2021-0138883 (2021.11.22)

### [Disclosure]

### [Technical Problem]

The present invention has been made in view of the above problems, and it is an object of the present invention to provide a swelling test apparatus capable of measuring the size of a battery module configured to obtain the results of a swelling test in real time while performing the swelling test by charging and discharging the battery module.

### [Technical Solution]

A swelling test apparatus according to the present invention to accomplish the above object includes a chamber having an internal space configured to accommodate a battery module, a power supply unit configured to charge and discharge the battery module, a measurement unit configured to measure changes in the size of the battery module, a frame unit configured to allow the measurement unit to be mounted thereto, and a receiving unit configured to receive information about the size of the battery module measured by the measurement unit, wherein the measurement unit is disposed so as to face a side surface of the battery module disposed in the chamber.

In the swelling test apparatus according to the present invention, the frame unit may include main frames located respectively outside both side surfaces parallel to an overall length direction of the battery module, a central axis of each of the main frames being parallel to the overall length direction of the battery module, vertical frames connected orthogonally to both ends of the main frames, and an upper frame configured to connect the vertical frames to each other while maintaining the form thereof, and the measurement unit may be mounted to the main frames.

In the swelling test apparatus according to the present invention, the measurement unit may move horizontally on the main frames.

In the swelling test apparatus according to the present invention, the main frames may be coupled to the vertical frames via adjustment members and move vertically along the vertical frames.

In the swelling test apparatus according to the present invention, the measurement unit may include a first measurement unit and a second measurement unit disposed respectively at both side surfaces of the battery module parallel to the overall length direction, and each of the first measurement unit and the second measurement unit may transmit results of measuring changes in the size of the battery module to the receiving unit in real time.

In the swelling test apparatus according to the present invention, the measurement unit may measure the distance between the battery module and the measurement unit discontinuously at a plurality of points.

In the swelling test apparatus according to the present invention, the measurement unit may measure the distance between the battery module and the measurement unit continuously while moving.

In the swelling test apparatus according to the present invention, the measurement unit may be a laser distance measurement device.

In the swelling test apparatus according to the present invention, each of the vertical frames may include a mounting portion provided at a lower end thereof, and the frame unit may be fixed to the bottom of the chamber via a fixing member fastened to the mounting portion.

In the swelling test apparatus according to the present invention, a positive electrode terminal and a negative electrode terminal of the battery module may be connected to the power supply unit such that the battery module is charged and discharged, and the measurement unit may measure changes in the external shape of the battery module being charged and discharged in real time.

In the swelling test apparatus according to the present invention, the measurement unit may move positionally to measure changes in the size of the battery module, and the distance between the measurement unit and the battery module may be maintained constant.

In the swelling test apparatus according to the present invention, the receiving unit may determine the degree of expansion of the side surfaces of the battery module using results measured by the measurement unit to calculate changes in the size of the battery module.

In addition, the present invention may provide various combinations of the above solving means.

### [Advantageous Effects]

According to the present invention, it is possible to check changes in the size of a battery module disposed in a chamber after each charge and discharge cycle or according to a set period while conducting a swelling test for the battery module.

Since changes in the volume of the battery module can be checked in real time even before the swelling test for the battery module is completed, as described above, it is possible to obtain more detailed and accurate results.

### [Description of Drawings]

FIG. 1 is a perspective view of a swelling test apparatus according to the present invention.
FIG. 2 is a side view of FIG. 1.
FIG. 3 is a front view of FIG. 1.
FIG. 4 is a partial perspective view of a battery module, showing discontinuous measurement positions of a measurement unit.
FIG. 5 is a partial perspective view of a battery module, showing continuous measurement positions of a measurement unit.
FIG. 6 is a graph showing changes in width of a battery module according to the number of charge and discharge cycles in an example.
FIG. 7 is a graph showing changes in width of a battery module according to the number of charge and discharge cycles in a comparative example.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

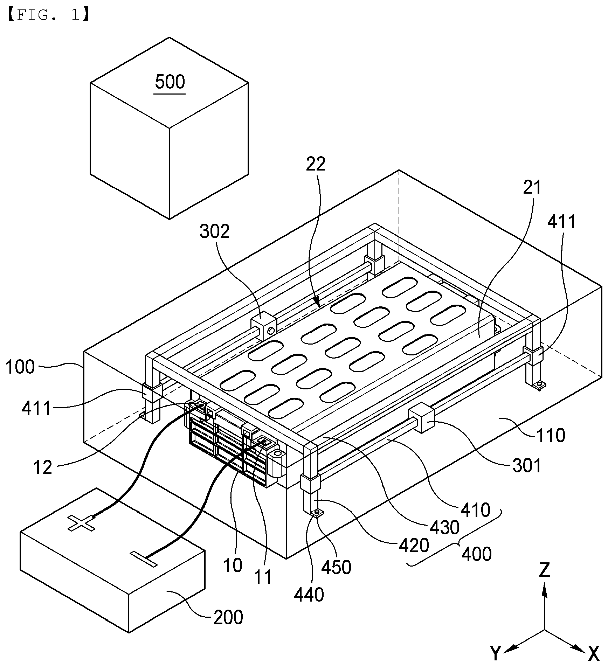

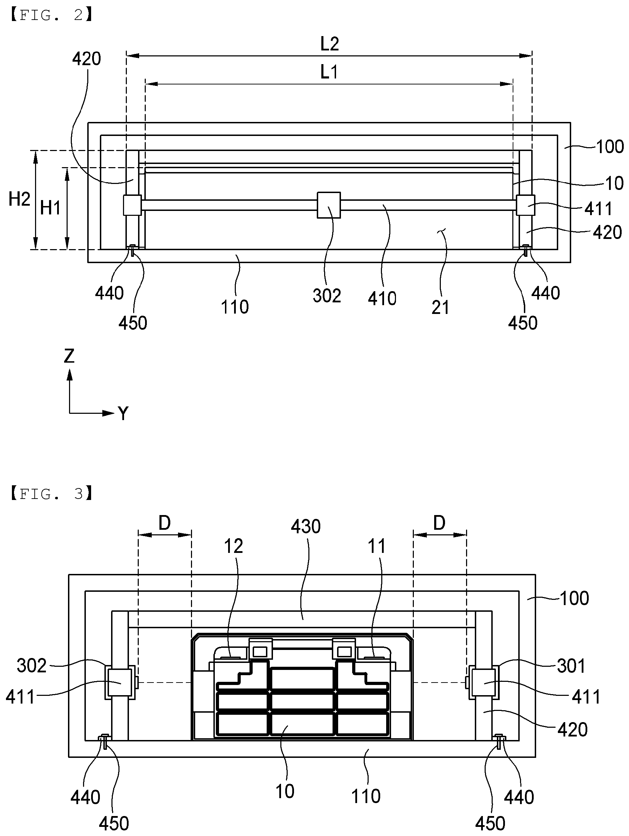

FIG. 1 is a perspective view of a swelling test apparatus according to the present invention, FIG. 2 is a side view of FIG. 1, and FIG. 3 is a front view of FIG. 1.

Referring to FIGs. 1 to 3, the swelling test apparatus according to the present invention includes a chamber 100 having an internal space configured to accommodate a battery module 10, a power supply unit 200 configured to charge and discharge the battery module 10, a measurement unit 300 configured to measure changes in the size of the battery module 10, a frame unit 400 to which the measurement unit 300 is mounted, and a receiving unit 500 configured to receive information about the size of the battery module 10 measured by the measurement unit 300, wherein the measurement unit 300 is disposed so as to face a side surface of the battery module 10 disposed in the chamber 100.

The battery module 10 has a positive electrode terminal 11 and a negative electrode terminal 12 located at one end thereof in an overall length direction, and pouch-shaped battery cells are mounted in the battery module, wherein the pouch-shaped battery cells are disposed so as be stacked in an X-axis direction in the battery module 10. Therefore, the pouch-shaped battery cells swell in the X-axis direction during charging and discharging, and therefore the battery module 10 prominently swells in the X-axis direction. As a result, a first side surface 21 and a second side surface 22 of the battery module may be convexly deformed.

In a specific example, the positive electrode terminal 11 and the negative electrode terminal 12 of the battery module 10 are connected to the power supply unit 200 such that the battery module can be charged and discharged, and the measurement unit 300 may measure changes in the external shape of the battery module 10 being charged and discharged in real time.

For example, the measurement unit 300 may be a laser distance measurement device, and the degree of swelling of the battery module 10 may be inspected based on the time taken for a laser beam emitted from the measurement unit 300 to reach the first side surface 21 and the second side surface 22 of the battery module 10.

The frame unit 400 includes main frames 410 located respectively outside the first side surface 21 and the second side surface 22, respectively, which are both side surfaces parallel to the overall length direction Y of the battery module 10, a central axis of each of the main frames 410 being parallel to the overall length direction Y of the battery module 10, vertical frames 420 connected orthogonally to both ends of the main frames 410, and an upper frame 430 formed in the shape of a quadrangular line, the upper frame being configured to connect all of the vertical frames 420 to each other while maintaining the form thereof. The measurement unit 300 is mounted to the main frames 410.

The measurement unit 300 measures the degree of volume expansion of the first side surface 21 and the second side surface 22 of the battery module 10 while horizontally moving along the main frames 410 in the Y-axis direction in a state of being mounted to the main frames 410. At this time, the measurement unit 300 may move along the main frames 410 in both directions.

In addition, the main frames 410 are coupled to the vertical frames 420 via adjustment members 411 and move vertically along the vertical frames 420 in a Z-axis direction.

The adjustment members 411 are mounted to the vertical frames 420, and the main frames 410 are coupled to the adjustment members 411. Consequently, the main frames 410 move in the Z-axis direction depending on the positional change of the adjustment members 411 moving along the vertical frames 420.

For the movement of the measurement unit 300 on the main frames 410 and the movement of the adjustment members 411 on the vertical frames 420, measurement positions and/or paths may be set using a servo motor, and therefore the movement thereof may be precisely controlled.

Referring to FIG. 2, the overall length L2 of the upper frame 430 is greater than the overall length L1 of the battery module 10, and the height H2 of the vertical frames 420 is greater than the height H1 of the battery module 10. That is, the measurement unit 300 may be mounted on to main frames 410 so as to reciprocate in the Y-axis direction, and may measure the degree of expansion of the first side surface 21 and the second side surface 22 through the vertical movement of the main frames 410.

The measurement unit 300 includes a first measurement unit 301 and a second measurement unit 302 disposed respectively at both side surfaces of the battery module 10 parallel to the overall length direction Y, wherein the first measurement unit 301 and the second measurement unit 302 transmit the results of measuring changes in the size of the battery module 10 to the receiving unit 500 in real time. The measurement unit 300 and the receiving unit 500 may be configured to perform wired or wireless communication.

The receiving unit 500 may determine the degree of expansion of the side surfaces of the battery module 10 using the results measured by the measurement unit 300 to calculate changes in the size of the battery module 10.

Since it is possible to measure changes in the volume of the battery module while charging and discharging the battery module, as described above, it is possible to record changes in the volume of the battery module during the charging and discharging processes, even before the set number of charge and discharge cycles is completed, and to transmit the results to the receiving unit for an observer to check the same.

In the present invention, a swelling test of charging and discharging the battery module is conducted in the state in which the battery module is disposed in the chamber 10, in which the battery module is charged and discharged, to check the volume expansion of the battery module, and the measurement unit 300 moves positionally to measure changes in the size of the battery module 10. At this time, as shown in FIG. 3, the distance D between the measurement unit 300 and the battery module 10 must be maintained constant to improve reliability of the results. Therefore, positional fixation of the battery module 10 and the frame unit 400 is necessary.

To this end, the vertical frame 420 includes a mounting portion 440 provided at a lower end thereof, and the frame unit 440 may be fixed to the bottom 110 of the chamber via a fixing member 450 fastened to the mounting portion 440. In addition, although not shown in the figures, a protrusion or a side wall configured to fix the position of the battery module 10 may be provided at the position at which the battery module 10 is disposed, or a separate mounting portion may be provided at the battery module and a separate fixing member may be fastened to the separate mounting portion such that the mounting portion can be fixed to the bottom 110 of the chamber.

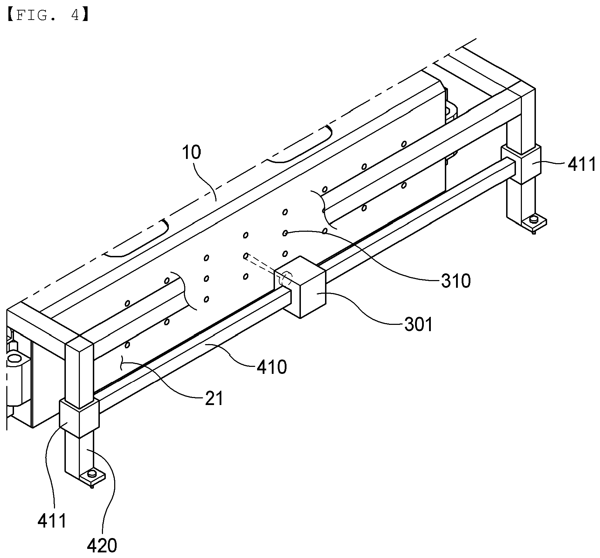

FIG. 4 is a partial perspective view of the battery module, showing discontinuous measurement positions of the measurement unit.

Referring to FIG. 4, when the positions of a plurality of points 310 to be measured are designated on the first side surface 21 of the battery module 10, the first measurement unit 301 may measure the distance between the battery module 10 and the first measurement unit 301 discontinuously at the plurality of points while moving along the main frames 410 and/or along the main frames 410 moving along the vertical frames 420.

In addition, the second measurement unit 302, which is not shown in FIG. 4, may measure the distance between the second side surface 22 of the battery module 10 and the second measurement unit 302 to check the degree of expansion of each of the first side surface 21 and the second side surface 22.

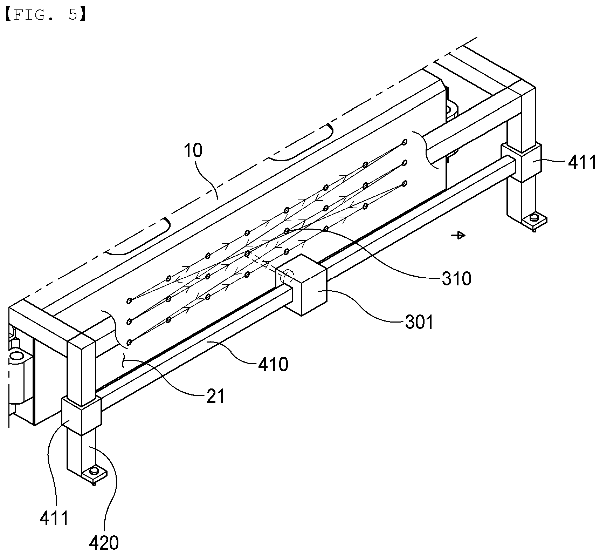

FIG. 5 is a partial perspective view of the battery module, showing continuous measurement positions of the measurement unit.

Referring to FIG. 5, in order to check the degree of expansion of the first side surface 21 of the battery module 10, the first measurement unit 301 may continuously measure the distance between the battery module 10 and the first measurement unit 301 while moving along the main frames 410 and/or along the main frames 410 moving along the vertical frames 420.

FIG. 5 shows a movement path of the measurement unit 301. The measurement unit 301 may scan the first side surface 21 while moving along the movement path to check the degree of expansion of the first side surface in three dimensions.

In addition, the second measurement unit 302, which is not shown in FIG. 5, may continuously measure the distance between the second side surface 22 of the battery module 10 and the second measurement unit 302 and may scan the second side surface 22 to check the degree of expansion of the second side surface in three dimensions.

Hereinafter, the present invention will be described with reference to an example. However, the example is provided only for easier understanding of the present invention and should not be construed as limiting the scope of the present invention.

### <Example>

As shown in FIG. 1, a battery module is disposed in the chamber of the swelling test apparatus according to the present invention, and the battery module is fixed to the bottom of the chamber. The frame unit is disposed so as to enclose the battery module, and the fixing members are inserted into the mounting portions to fix the frame unit to the bottom of the chamber.

The power supply unit is connected to a positive electrode terminal and a negative electrode terminal of the battery module, the position of the measurement unit is fixed, and the battery module is charged and discharged up to 800 cycles.

The measurement unit measured the distance to the side surface of the battery module every 10 cycles in a state of being fixed at a predetermined position.

The measured results were transmitted wirelessly to the receiving unit.

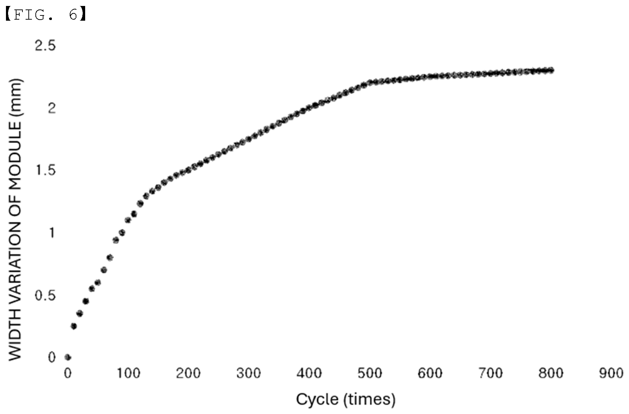

FIG. 6 is a graph showing changes in width of the battery module according to the number of charge and discharge cycles in the example.

Referring to FIG. 6, it is possible to obtain the results of measuring changes in the width of the battery module at 10 cycle intervals from the start of charging and discharging to 800 cycles.

### <Comparative example>

First, the width of a battery module is measured using vernier calipers.

The battery module is disposed in a chamber in which a swelling test is conducted, and a power supply unit is connected to a positive electrode terminal and a negative electrode terminal of the battery module. After performing 200 charge and discharge cycles, the battery module is removed from the chamber, and the width of the battery module is measured using the vernier calipers.

The battery module is disposed in the chamber again, and additional 200 charge and discharge cycles are further performed. That is, a total of 400 charge and discharge cycles is performed. The battery module is removed from the chamber, and the width of the battery module is measured using the vernier calipers.

The battery module is disposed in the chamber again, and additional 200 charge and discharge cycles are further performed. That is, a total of 600 charge and discharge cycles is performed. The battery module is removed from the chamber, and the width of the battery module is measured using the vernier calipers.

The battery module is disposed in the chamber again, and additional 200 charge and discharge cycles are further performed. That is, a total of 800 charge and discharge cycles is performed. The battery module is removed from the chamber, and the width of the battery module is measured using the vernier calipers.

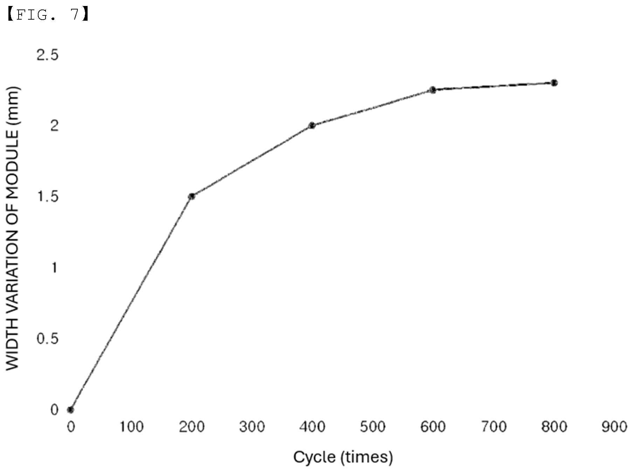

FIG. 7 is a graph showing changes in width of the battery module according to the number of charge and discharge cycles in the comparative example.

Referring to FIG. 7, the results after 200, 400, 600, and 800 charge and discharge cycles are discretely shown, and the width variation of the battery module during other charge and discharge cycles was derived using linear interpolation.

Therefore, when measuring the volume expansion of the battery module as in the example, it is possible to check the degree of expansion of the battery module after each charge and discharge cycle or according to a set period, regardless of the number of charge and discharge cycles.

As a result, it is possible to more efficiently conduct the development process and to facilitate effective decision-making.

Those skilled in the art to which the present invention pertains will appreciate that various applications and modifications are possible within the scope of the present invention based on the above description.

### (Description of Reference Numerals)

- 10:: Battery module
- 11:: Positive electrode terminal
- 12:: Negative electrode terminal
- 21:: First side surface
- 22:: Second side surface
- 100:: Chamber
- 110:: Bottom of chamber
- 200:: Power supply unit
- 300:: Measurement unit
- 301:: First measurement unit
- 302:: Second measurement unit
- 310:: Point
- 400:: Frame unit
- 410:: Main frame
- 411:: Adjustment member
- 420:: Vertical frame
- 430:: Upper frame
- 440:: Mounting portion
- 450:: Fixing member
- 500:: Receiving unit

## Claims

1. A swelling test apparatus comprising:
a chamber having an internal space configured to accommodate a battery module;
a power supply unit configured to charge and discharge the battery module;
a measurement unit configured to measure changes in size of the battery module;
a frame unit configured to allow the measurement unit to be mounted thereto; and
a receiving unit configured to receive information about the size of the battery module measured by the measurement unit, wherein
the measurement unit is disposed so as to face a side surface of the battery module disposed in the chamber.

2. The swelling test apparatus according to claim 1, wherein
the frame unit comprises:
main frames located respectively outside both side surfaces parallel to an overall length direction of the battery module, a central axis of each of the main frames being parallel to the overall length direction of the battery module;
vertical frames connected orthogonally to both ends of the main frames; and
an upper frame configured to connect the vertical frames to each other while maintaining a form thereof, and
the measurement unit is mounted to the main frames.

3. The swelling test apparatus according to claim 2, wherein the measurement unit moves horizontally on the main frames.

4. The swelling test apparatus according to claim 3, wherein the main frames are coupled to the vertical frames via adjustment members and move vertically along the vertical frames.

5. The swelling test apparatus according to claim 1, wherein
the measurement unit comprises a first measurement unit and a second measurement unit disposed respectively at both side surfaces of the battery module parallel to the overall length direction, and
each of the first measurement unit and the second measurement unit transmits results of measuring changes in the size of the battery module to the receiving unit in real time.

6. The swelling test apparatus according to claim 3, wherein the measurement unit measures a distance between the battery module and the measurement unit discontinuously at a plurality of points.

7. The swelling test apparatus according to claim 3, wherein the measurement unit measures a distance between the battery module and the measurement unit continuously while moving.

8. The swelling test apparatus according to claim 1, wherein the measurement unit is a laser distance measurement device.

9. The swelling test apparatus according to claim 2, wherein
each of the vertical frames comprises a mounting portion provided at a lower end thereof, and
the frame unit is fixed to a bottom of the chamber via a fixing member fastened to the mounting portion.

10. The swelling test apparatus according to claim 1, wherein
a positive electrode terminal and a negative electrode terminal of the battery module are connected to the power supply unit such that the battery module is charged and discharged, and
the measurement unit measures changes in external shape of the battery module being charged and discharged in real time.

11. The swelling test apparatus according to claim 1, wherein
the measurement unit moves positionally to measure changes in the size of the battery module, and
a distance between the measurement unit and the battery module is maintained constant.

12. The swelling test apparatus according to claim 1, wherein the receiving unit determines a degree of expansion of the side surfaces of the battery module using results measured by the measurement unit to calculate changes in the size of the battery module.
